(19) Europäisches Patentamt
European Patent Office
Office européen des brevets

(11) **EP 4 570 452 A2**

(12) **EUROPEAN PATENT APPLICATION**

(43) Date of publication:
**18.06.2025 Bulletin 2025/25**

(21) Application number: **24204430.3**

(22) Date of filing: **03.10.2024**

(51) International Patent Classification (IPC):
**B25J 9/16** (2006.01)   **G06N 3/008** (2023.01)

(52) Cooperative Patent Classification (CPC):
**B25J 9/163; G06N 3/008;** G05B 2219/40264;
G05B 2219/40304; G05B 2219/40499

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **03.10.2023   US 202363542225 P
08.05.2024   US 202418658153**

(71) Applicant: **Disney Enterprises, Inc.
Burbank, CA 91521 (US)**

(72) Inventors:
• **Bächer, Moritz**
  **Burbank, 91521 (US)**
• **Wiedebach, Georg**
  **Burbank, 91521 (US)**
• **Peavy, Joel**
  **Burbank, 91521 (US)**
• **Knoop, Lars**
  **Burbank, 91521 (US)**
• **Pickles, Steven**
  **Burbank, 91521 (US)**
• **Bishop, Jared**
  **Burbank, 91521 (US)**
• **Grandia, Ruben**
  **Burbank, 91521 (US)**
• **Hopkins, Michael**
  **Burbankd, 91521 (US)**

(74) Representative: **Lloyd, Robin Jonathan et al
Kilburn & Strode LLP
Lacon London
84 Theobalds Road
London WC1X 8NL (GB)**

(54) **RAPID DESIGN AND ANIMATION OF FREELY-WALKING ROBOTIC DEVICES**

(57)     A method of training a robotic device includes: parameterizing, via a processing element, an input to the robotic device. The parameterizing comprises defining a range of values of the input. The method further includes generating, via the processing element, a plurality of samples of the parameterized input from within the range of values; training a control policy, via the processing element. The training includes: providing the plurality of samples to the control policy, wherein the control policy is adapted to operate an actuator of the robotic device, and generating, via the processing element, a policy action using the control policy; transmitting the policy action to a robotic model, wherein the robotic model includes a physical model of the robotic device. The method further includes deploying the one or more trained control policies to an on-board controller for the robotic device.

FIG. 1

**EP 4 570 452 A2**

**Description**

FIELD

The present application relates to systems and methods for controlling and generating effects with robotic characters.

CROSS-REFERENCE TO RELATED APPLICATIONS

This application claims the benefit of priority under 35 U.S.C. § 119(e) and 37 C.F.R. § 1.78 to provisional application no. 63/542,225 filed on October 3, 2023, titled "Rapid Design and Animation of Freely-Walking Robotic Characters" which is hereby incorporated by reference herein in its entirety.

BACKGROUND

Creating and training robotic characters, such as free moving robots, can be time intensive and processing intensive. Previous model-based processes for creating free moving robots often are too-closely tied to the physical hardware, making changes and improvements to the processes or hardware difficult, i.e., new hardware requires entirely new control processes to enable accurate control and balance for the robotic device. Therefore, there exists a need for improved processes that can enable quick design of stable and creative robotic systems.

BRIEF SUMMARY

In one embodiment, a method of training a robotic device includes: parameterizing, via a processing element, an input to the robotic device, for example to generate a parametrized input, wherein the parameterizing includes defining a range of values of the input; generating, via the processing element, a plurality of samples of the parameterized input from within the range of values; training a control policy, via the processing element, for example to generate a trained control policy, wherein the training includes: providing the plurality of samples to the control policy, wherein the control policy is adapted to operate an actuator of the robotic device, and generating, via the processing element, a policy action using the control policy; transmitting the policy action to a robotic model, wherein the robotic model includes a physical model of the robotic device; and deploying the trained control policy to an on-board controller for the robotic device.

Optionally, in some embodiments, the input to the robotic device includes at least one of: a mass, torque, force, speed, number, type, or range of motion of a component of the robotic device; a perturbance imparted to the robotic device; an operator command; or an environmental characteristic.

Optionally, in some embodiments, the perturbance comprises noise.

Optionally, in some embodiments, the control policy is adapted to cause the robotic device to perform at least one of a perpetual motion, a periodic motion, or an episodic motion.

Optionally, in some embodiments, the method further comprises generating, via the processing element, a reference motion of the actuator based on the parameterized input.

Optionally, in some embodiments, the training further includes: simulating, via the processing element, a motion of the actuator, for example to generate a simulated motion, using the physical model; comparing, via the processing element, the simulated motion of the actuator to the reference motion to generate a comparison; and rewarding, via the processing element, the control policy based on the comparison.

Optionally, in some embodiments, the range of values is pre-defined, based on a characteristic of the actuator. The reference motion may be based on the plurality of samples.

In one embodiment, a method of operating a robotic device includes: receiving, at a processing element, a user input, optionally wherein the processing element is in communication with one or more actuators of the robotic device; comparing, via the processing element, the user input to an animation database to generate a second comparison; selecting, via the processing element, an animation from the animation database based on the second comparison; activating, via the processing element, the control policy for the selected animation,; generating, via the processing element, a low-level control adapted to control the actuator; controlling, via the low-level control, the actuator.

Optionally, in some embodiments, the robotic device has been trained using the above-described method of training The control policy may have been trained by a reinforcement learning method.

Optionally, in some embodiments, the user input includes a command to activate a show function of the robotic device.

Optionally, in some embodiments, the show function is independent of the actuator.

Optionally, in some embodiments, the show function includes activating at least one of a light, a moveable antenna, an eye, or a sound of the robotic device.

Optionally, in some embodiments, the reinforcement learning method includes one or more of the following: parameterizing, via a second processing element, an input to the robotic device, wherein the parameterizing includes defining a range of values of the input; generating, via the second processing element, a plurality of samples of the parameterized input from within the range of values; providing, via the second processing element, the plurality of samples to a control policy; generating, via the second processing element, a policy action using the control policy and transmitting the policy action to a robotic model, wherein the robotic model includes a physical model of the robotic device; simulating, via the second processing element, a motion of the robotic device actuator using the physical model; comparing, via the second processing element, the simulated motion of the robotic device actuator to a reference motion of the robotic device actuator, wherein the reference motion is based on the plurality of samples; and rewarding, via the processing element, the control policy based on the comparison of the simulated motion of the robotic device actuator to the reference motion.

Optionally, in some embodiments, the input to the robotic device includes at least one of: a mass, torque, force, speed, number, type, or range of motion of a component of the robotic device; a perturbance imparted to the robotic device; an operator command; or an environmental characteristic.

Optionally, in some embodiments, the control policy is adapted to cause the robotic device to perform at least one of a perpetual motion, a periodic motion, or an episodic motion.

Optionally, in some embodiments, the selected animation includes one or more of a background animation or a triggered animation, and the method of operating the robotic device further includes layering at least one of the background animation or the triggered animation with a remote control animation.

Optionally, in some embodiments, the remote control animation is based on the user input received from a remote control.

In one embodiment, a robotic device includes: a plurality of modular hardware components; a processing element in communication with the plurality of modular hardware components; a plurality of control policies trained by a reinforcement learning method to control the plurality of modular hardware components.

Optionally, in some embodiments, the user input includes a command to activate a show function of the robotic device.

Optionally, in some embodiments, the show function is independent of the robotic device actuator.

Optionally, in some embodiments, the selected animation includes one or more of a background animation or a triggered animation, and the robotic device is further operable by layering at least one of the background animation or the triggered animation with a remote control animation.

Optionally, in some embodiments, the reinforcement learning method includes: parameterizing, via a second processing element, an input to the robotic device, wherein the parameterizing includes defining a range of values of the input; generating, via the second processing element, a plurality of samples of the parameterized input from within the range of values; providing, via the second processing element, the plurality of samples to a plurality of control policies; generating, via the second processing element, a policy action using one of the plurality of control policies and transmitting the policy action to a robotic model, wherein the robotic model includes a physical model of the robotic device; simulating, via the second processing element, a motion of the actuator using the physical model; comparing, via the second processing element, the simulated motion of the actuator to a reference motion of the actuator, wherein the reference motion is based on the plurality of samples; and rewarding, via the processing element, the one of the plurality of control policies based on the comparison of the simulated motion of the actuator to the reference motion.

Optionally, in some embodiments, the input to the robotic device includes at least one of: a mass, torque, force, speed, number, type, or range of motion of the actuator; a perturbance imparted to the robotic device; a user input or an environmental characteristic.

Optionally, in some embodiments, the plurality of policies are adapted to cause the robotic device to perform at least one of a perpetual motion, a periodic motion, or an episodic motion.

Optionally, in some embodiments, the robotic device is operable by: receiving, at the processing element, a user input; comparing, via the processing element, the user input to the animation database; selecting, via the processing element, an animation from the animation database based on the comparison; activating, via the processing element, a control policy of the plurality of control policies for the selected animation; generating, via the processing element, a low level control adapted to control the actuator; controlling, via the low level control, the plurality of modular hardware components.

In one embodiment, a method of controlling a robotic device includes: generating, via a first trained control policy executed by a processing element, a first policy action adapted to perform a perpetual motion; generating, via a second trained control policy executed by the processing element, a second policy action adapted to perform a periodic motion; generating, via a third trained control policy executed by the processing element, a third policy action adapted to perform an episodic motion; and deploying, via the processing element, the first, second, and third policy actions to a plurality of actuators of the robotic device, wherein the plurality of actuators are adapted to perform the perpetual motion, the periodic motion, and the episodic motion.

BRIEF DESCRIPTION OF THE DRAWINGS

FIG. 1 illustrates an embodiment of a robotic device that may utilize the control frameworks and training methods described herein.

FIG. 2 illustrates an embodiment of a method of training a policy suitable for use with the robotic device of FIG. 1.

FIG. 3 illustrates an embodiment of a method of operating a policy suitable for use with the robotic device of FIG. 1.

FIG. 4A illustrates an embodiment of a perpetual motion of the robotic device of FIG. 1 as implemented by an embodiment of the policy of FIG. 2 and FIG. 3.

FIG. 4B illustrates an embodiment of a periodic motion of the robotic device of FIG. 1 as implemented by an embodiment of the policy of FIG. 2 and FIG. 3.

FIG. 4C illustrates an embodiment of an episodic motion of the robotic device of FIG. 1 as implemented by an embodiment of the policy of FIG. 2 and FIG. 3.

FIG. 5A - FIG. 5C illustrate a method of layering animations of the embodiment of the robotic device of FIG. 1 using the embodiment of the policy of FIG. 2 and FIG. 3.

FIG. 6 is a flow chart of an embodiment of a method of training a policy suitable for use with the robotic device of FIG. 1.

FIG. 7 illustrates a system diagram for generating control frameworks for the robotic device of FIG. 1.

FIG. 8 illustrates a system diagram for controlling the robotic device of FIG. 1 utilizing the frameworks described herein.

FIG. 9 is a simplified block diagram of components of a computing system suitable for use with the robotic device of FIG. 1, or the methods of FIG. 2, FIG. 3, and FIG. 6.

DETAILED DESCRIPTION

The present disclosure includes embodiments for an integrated set of software and/or hardware tools to quickly design, build, animate, and/or control custom robotic devices. In some instances, these robotic devices that can freely move, walk, as well as be configured to perform other movements, such as those that may be generated as part of a creative process. In some examples, robotic devices can be selected to both aesthetically and functionally replicate a character. In some examples, the robotic design can be simulated in a simulation environment and a learned model is deployed to an onboard computer for a robotic device.

The robotic devices may be generated from a set of modular hardware components. For example, various actuators, controllers, sensors, real-time computers, electrical boards, etc., and the like, may be combined in different manners to generate different robotic devices with different aesthetic appearances and functionality. In some embodiments, the modular hardware components are combined with parts made using various rapid prototyping methods such as machining or additive manufacturing (e.g., 3D printing or the like). The modular aspects of the hardware and machined or additive parts allow the robots to be quickly created and at a low cost as compared to conventional custom robotic systems that may be used.

To allow the robots to perform artist-specified walking cycles or other animations despite the use of modular hardware (which may be less tailored to the specific functionality or include tolerance or other issues), a reinforcement learning ("RL") technique may be used. RL techniques use a motion policy (or control policy) that governs how the robotic device moves in a particular situation. To train the policy, the policy is asked to perform a certain motion (e.g., walking) and the motion output generated by the policy is compared to a reference motion (i.e., input or desired motion). Policy-generated motion that matches the reference motion is rewarded or reinforced and policy-driven motion that deviates from the reference motion is penalized. Rewards strengthen portions of the policy that result in proper motion, while penalties de-emphasize portions of a policy that result in incorrect or undesired motion.

By using reinforcement learning techniques, the specific hardware used in the robotic device does not need to be as well defined as with prior techniques that typically required a bespoke control model for each hardware design. In various embodiments, a computer aided design ("CAD") model may be generated that includes mass properties representative of the robotic device. A robotic model may be created based on the CAD model and placed in a simulation environment. In the simulation, the robotic model is instructed to imitate artist-specified motion, while keeping balance with a set of rewards.

Examples of control policy types include perpetual motions that do not have a clear start and end (e.g., standing), periodic motions that animate repetitive actions (e.g., walking or running), and episodic motions that have a pre-defined duration (e.g., expressive or hero pose sequences). For example, a "hero" pose sequence may be one or more animation of the robotic device 100 that resemble or give life to a character played by the robotic device 100. A hero pose sequence may also be an emotive or expressive animation that resembles or displays an emotional state (e.g., sadness, excitement, happiness, etc.). Using varying temporal motions, along with the modular hardware and RL techniques and simulation, a control policy for many different types of animations or desired actions can be rapidly trained and deployed to a robotic device.

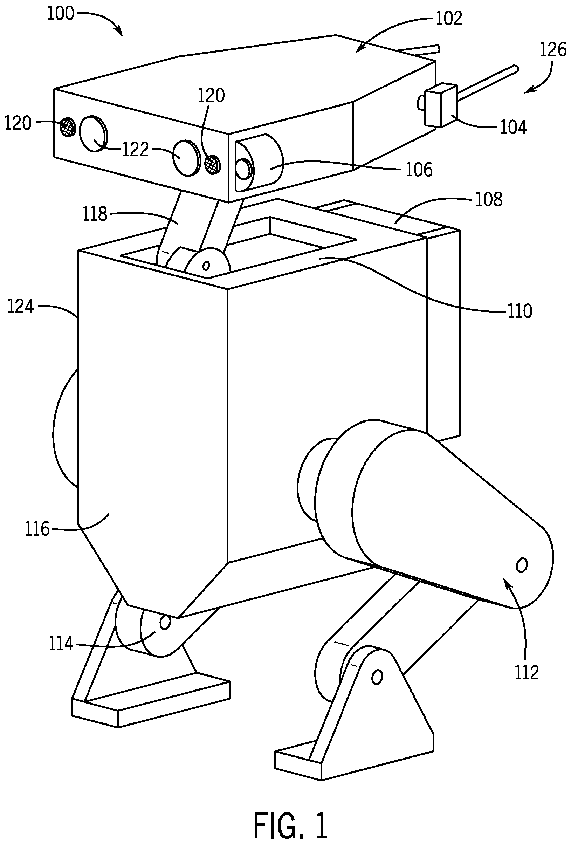

Turning to the figures, FIG. 1 shows an example of a robotic device 100 suitable to be controlled and trained with the methods and systems disclosed herein. In some examples, a robotic device 100 may include quasi-direct drive actuators with integrated controllers, sensors (e.g., Inertial Measurement Units or "IMUs"), a custom electronics module to facilitate communication, on-board real-time or near real-time processor, a battery or power module, and/or a show function module that integrates displays (e.g., to represent character's eyes), speakers, and other animated functions (e.g., eyes, moveable antennae, or other features). In this example, the robotic device 100 has 5 degrees of freedom in each leg 112 and 4 degrees of freedom in the neck 118, enabling it to perform motions such as walking, but also move the neck and head and body independently as desired for different performances. Robots with more or fewer degrees of freedom may also be trained with the methods and systems herein.

The robotic device includes show or output functions 126 such as illuminated eyes 122, antennae 104, speakers 120 in the body and in the head, and a head lamp 106. Show functions 126 can provide additional animation or expressiveness to the robotic device 100 without affecting the overall motion of its body. For example, the show functions 126 may be artistically controlled and synchronized with the overall motion of the robotic device but do not affect the balance of the robotic device. For example, the eyes 122 may illuminate and/or the antennae 104 move, regardless of any motion of the robotic device's legs 112 or neck 118. In some examples, a robotic device may include more, fewer, or no show functions.

The robotic device has an on-board controller 102 interface to the actuator 114 hardware, such as actuators in the legs 112 and neck 118 via microcontroller-driven communications. The robotic device actuators have integrated motor drives which implement low-level control loops (e.g., to control speed, location, torque, etc.), and also built-in encoders to measure their position (e.g., may generate state estimation 314 of one or more portions of the robotic device 100). Actuators 114 are also interfaced to the communications interface 116. An inertial measurement unit 110 is coupled to the body 124 and is interfaced to the communications interface 116. An on-board battery 108 provides power to the actuators 114 and also the on-board controller 102 and other components.

The controller 102 runs the robotic device 100 controller (e.g., real time controller), receiving the commands for the robotic device 100 motion (e.g., from an external operator), and also receiving the measurements of the state of the robotic device (e.g., inertial measurements from the IMU 110 and position, velocity, torque, force, acceleration, etc. measurement from actuators 114). The controller 102 also receives additional diagnostics information from the actuators 114 such as temperature and battery voltage.

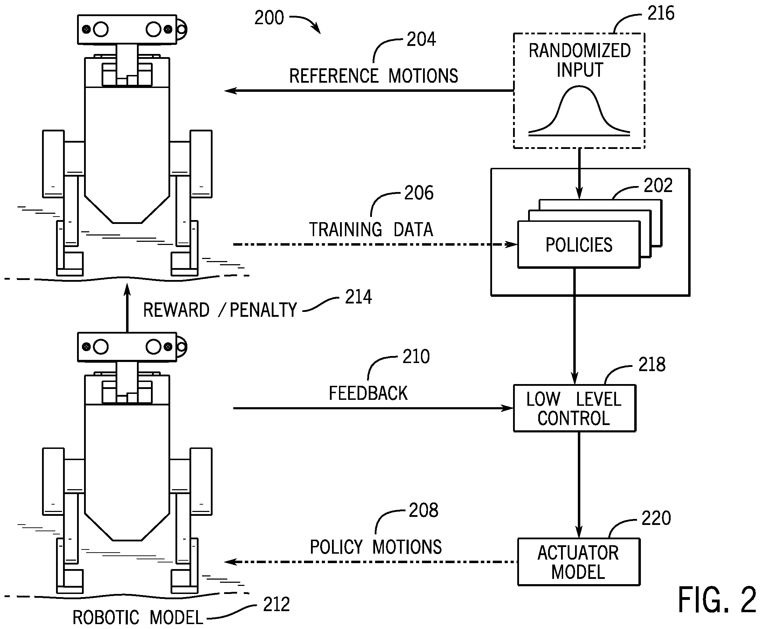

FIG. 2 illustrates a reinforcement learning training method 200 for a policy 224 including one or more policies 202 for a robotic device, such as the robotic device 100. In various embodiments, a "policy" refers to a computational entity, executable code, or software program that interacts with an environment to achieve certain goals. Specifically, in reinforcement learning, the policy learns to make decisions by performing actions and receiving feedback in the form of rewards or penalties. The policy's objective is to learn a policy that maximizes cumulative reward over time. In some embodiments, the policy does this by exploring the state space of the environment, and learning from the outcomes of the policy's actions, effectively refining the policy or policies e.g., based on trial and error or parameterization of inputs as discussed herein. In various embodiments, the policy represents a learning mechanism that iteratively adjusts the control policy of the robotic device 100, aiming to optimize the robotic device's performance in carrying out a designated task or set of tasks (e.g., perpetual motions, periodic motions, or episodic motions, etc.). Although the example method 200 depicts a particular sequence of operations, the sequence may be altered without departing from the scope of the present disclosure. For example, some of the operations depicted may be performed in parallel or in a different sequence that does not materially affect the function of the method 200. In other examples, different components of an example device or system that implements the method 200 may perform functions at substantially the same time or in a specific sequence.

Before training the policies 202, a physical computer model (e.g., computer aided model or CAD solid model corresponding to hardware components) of the robotic device 100 may be used to develop a robotic model 212. The robotic model 212 represents the physics of the robotic device 100, its actuators 114, and the interaction of the robotic device with the environment. For example, the rigid body dynamics of the robotic device 100 may be simulated via the robotic model 212. To accurately describe the full dynamics of the physical hardware, custom actuator models 220 may be added to the robotic model 212. Such custom actuator models 220 are configured to be representative of the actuators used within the physical hardware. The employed models may be derived from first principles with parameters obtained from system identification experiments of the individual actuators 114.

The robotic device 100 may be controlled with multiple policies conditioned on a time-varying control input $\mathbf{g}_t$. At each time step, the policy 202 produces an action $\mathbf{a}_t$ according to a policy 202, $\pi(\mathbf{a}_t|\mathbf{s}_t, \phi_t, \mathbf{g}_t)$, provided with the observable state, $\mathbf{s}_t$, and optional conditional inputs $\phi_t$ and $\mathbf{g}_t$, where $\phi_t$ is a phase signal. During training (e.g., in the method 200), the robotic model 212 produces the next state, $\mathbf{s}_{t+1}$, updates the phase signal, and returns a scalar reward $r_t = r(\mathbf{s}_t, \mathbf{a}_t, \mathbf{s}_{t+1}, \phi_t, \mathbf{g}_t)$. The policy may be rewarded based on the close imitation of artist-specified kinematic reference motions, and also dynamic balancing.

The RL training method 200 adapts the parameters of a policy 202, which contains the RL control policy 202, typically a neural network, to maximize rewards within an environment. To collect a sufficient amount of training data, a stochastic robotic model is created that accurately describes the physics of the robotic device 100, the actuators 114, low-level software, and the interaction of the robotic device 100 with the environment. The parameters of these models are obtained from system identification experiments of the hardware. It is possible to randomize some of the parameter values, for example to account for variations in mass properties or frictional coefficients of the ground the robotic device is walking on. These robotic models 212 together provide a system state over time. In some examples, noise may be added to the randomized values to provide for further robustness.

The method 200 may begin with the generation of one or more randomized inputs 216 provided to the robotic model in another operation of the method 200. As the robotic model will not be a perfect representation of the real world, an advantage of the training method 200 is the ability of the method to help close the "simulation-to-real" gap and enable the robotic device 100 to achieve the desired performance when control policies are deployed to the real robot. The randomized inputs 216 may be of one or more types.

In some embodiments, a first type of randomized input 216 may include physical properties or parameters of the components (e.g., actuators) of the robotic device 100, such as size, speed, acceleration, range of motion, mass, moment of inertia, spring rate, or other mass properties of the robotic device 100.

An example of a first type of randomized input 216 may also include properties of the environment with which the robotic device interacts. For example, the environment has geometric properties (e.g., even vs. uneven terrain, obstacles, etc.) and physical properties (e.g., surface properties such as roughness or coefficient of friction). The simulated robots are trained in a terrain that includes randomized height field patches, stairs, etc. In some embodiments, the terrain is initialized and fixed during a particular training iteration. The surface properties of any part of the simulated environment may be varied. For example, a dynamic and/or static coefficient of friction of any surface of the environment may be randomized. Training the robotic device 100 on randomized inputs of this type has the surprising benefit of enabling a robotic device to walk on a variety of surfaces (e.g., carpet, tiles, ice, a pile of lumber, stairs, etc.).

An example of a second type of randomized input 216 may include randomizing one or more perturbations applied to the robotic device, such as an input torque or force. Such perturbations may be imparted to a real robotic device 100 by the device colliding with an obstacle (moving or stationary), being pushed, pulled, or otherwise interfered with, or from factors such as wind, rain, etc. Training the robotic device 100 on randomized inputs of the second type may have the surprising benefit of making the control policies robust to external perturbations such that the robotic device can perform desired motions even when being interfered with.

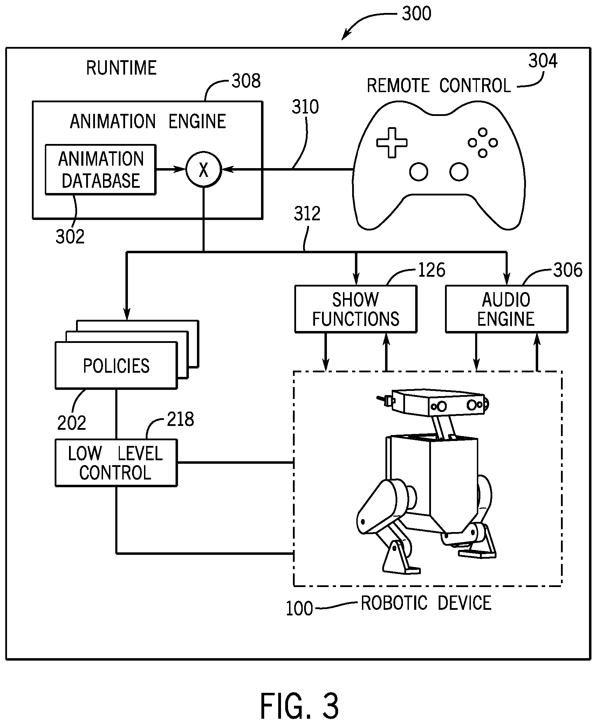

An example of a third type of randomized input 216 may include a randomized operator input command. For example, one or more user inputs from a remote control 304 (discussed with respect to FIG. 3) may be randomized about relevant ranges and passed to the robotic model for simulation. Training the robotic device 100 on randomized inputs of the third type may have the surprising benefit of enabling a robotic device to balance under arbitrary, or even conflicting, operator commands.

During the training method 200, inputs are randomized e.g., over their full input range (e.g., over a pre-defined range of values) and the robotic model 212 is perturbed with the randomized inputs 216. By randomizing over several domains (e.g., mass properties and the terrain the robotic device 100 is positioned or walking on), as well as applying random perturbation forces and torques to individual components of the robotic device 100, the control policies 202 can be trained to be robust to disturbances (e.g., pushing and pulling in any direction) and allow the robotic device 100 to stably walk on non-flat terrain (e.g., forest ground or a gravel path).

In one example, end points (e.g., maxima or minima) can be set for a given motion or parameter (e.g., speed of an actuator, mass, terrain, etc.) and the policy 202 can be trained repeatedly on reference motions using randomized inputs 216 within given endpoints. Thus, a policy 202 can be quickly trained on a wide variety of parameters without knowledge of the specific values of the hardware, environment, etc., resulting in more robust and flexible control of the robotic device 100. The policy 202 is able to robustly perform the intended motions under a broad distribution of states and user inputs.

The randomized inputs 216 are converted to reference motions 204 that are transmitted to the policy 202 including the policies 202 and also to a comparison model 222. In this example, the policy 202 produces actuator 114 set points and receives system state data and user inputs. For example, the policies 202 receive the randomized inputs 216 and generate command outputs that are fed to a low-level control 218 (e.g., a control at an actuator 114 level).

By accumulating the rewards the policy 202 receives with the history of commands, states, and actions and maximizing those rewards, the policy 202 will learn to match the desired input as closely as possible, while avoiding self-collisions (e.g., the head hitting the body) and also respecting the limits of the hardware, in addition to keeping dynamic balance. A stronger emphasis is placed on respecting the hardware limits, meaning that if an artist-prescribed motion would be infeasible (e.g., would lead to a self-collision) then the policy 202 is able to make adjustments to the motion so that the collisions are resolved. Because the full robotic device motion is commanded by a single controller, it is able to make non-local motion changes (e.g., shift the neck to allow a greater head motion), and it also handles non-local collisions which arise through the movement of multiple joints. This functionality enables a larger motion gamut in this context, but it would also be applicable in other robotic device motion retargeting applications.

The low-level control 218 generates an output to an actuator model 220 that models specific details of an actuator 114 (e.g., mass, speed, torque, force, motion limits, etc.). The actuator models 220 augment the physics simulator. System identification may be performed by mounting single actuators 114 on a test-bench that measures output torque. Examples of identified parameters are provided in Table 1.

In some examples, the proportional derivative motor torque equation for the quasi-direct drives used in this work is computed through,

$$\tau_m = k_P(a - \tilde{q}) - k_D\dot{q}, \qquad (Eq. 1)$$

where $k_P$ and $k_D$ are gains, $a$ is the joint setpoint, $\dot{q}$ is the joint velocity, and $\tilde{q}$ is the joint position with an added encoder offset, $\varepsilon_q$,

$$\tilde{q} = q + \epsilon_q \qquad (Eq. 2)$$

In some examples, this encoder offset is drawn from a uniform distribution, $\mathcal{U}(-\varepsilon_{q,max}, \varepsilon_{q,max})$, at the beginning of each RL episode and accounts for inaccuracy in our joint calibration.

In some examples, the actuators used in the head do not implement the same PD equation and instead use,

$$\tau_m = k_P(a - \tilde{q}) + k_D\frac{d}{dt}(a - \tilde{q}), \qquad (Eq. 3)$$

where the derivative term operates on the numerical differentiation of the setpoint error.

In some examples, friction in the joint is modelled as,

$$\tau_f = \mu_s\tanh(\dot{q}/\dot{q}_s) + \mu_d\dot{q}, \qquad (Eq. 4)$$

where $\mu_s$ is the static coefficient of friction, with activation parameter $\dot{q}_s$, and $\mu_d$ is the dynamic coefficient of friction.

In some examples, the torque produced at the joint can then be computed by applying torque limits to $\tau_m$ and subtracting friction forces,

$$\tau = \mathrm{clamp}_{[\underline{\tau}(\dot{q}), \overline{\tau}(\dot{q})]}(\tau_m) - \tau_f, \qquad (Eq. 5)$$

where $\underline{\tau}(\dot{q})$, and $\overline{\tau}(\dot{q})$, are the velocity-dependent minimum and maximum torques of the motor. These limits include a constant limit torque for braking and low velocities, $\tau_{max}$, and a linear limit ramping down the available torque above an identified velocity, $\dot{q}_{\tau max}$. The linear limit crosses the velocity, $\dot{q}_{max}$, when the limit torque is 0 N m.

In some examples, the measured joint position reported by the actuator model contains the encoder offset, a term that models backlash and noise,

$$\hat{q} = \tilde{q} + 0.5 \cdot b \cdot \tanh(\tau_m/\tau_b) + \mathcal{N}(0, \sigma_q^2), \qquad (Eq. 6)$$

where $b$ is the total motor backlash with activation parameter $\tau_b$. $b$ is drawn from a uniform distribution, $\mathcal{U}(b_{min}, b_{max})$ at the start of each episode. This term models the effect that a motor moves to the side of the backlash in the same direction as the applied motor torque. For the noise model, we fit a normal distribution with the standard deviation proportional to the motor rotating velocity

$$\sigma_q = \sigma_{q,0} + \sigma_{q,1}|\dot{q}| \qquad (Eq. 7)$$

In some examples, the reflected inertia of the actuator, $I_m$, is added to the robotic model. In a rigid body dynamics simulator, this can be done by setting the *armature* value of the corresponding joint. This value is randomized up to a 20 % offset at the start of each episode.

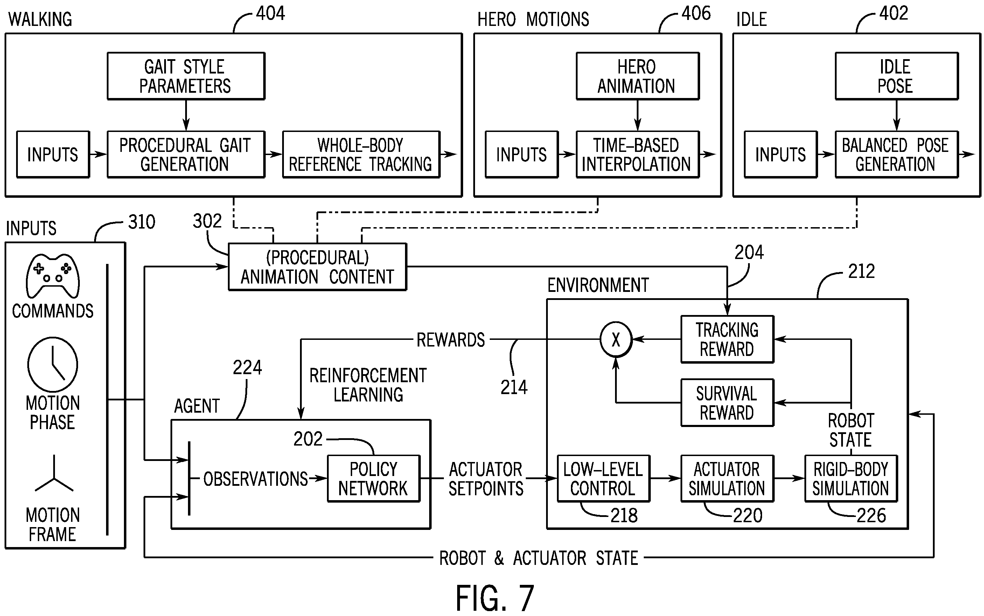

User input 310 may also pass to a rigid body simulation 226 (e.g., as shown in FIG. 7) that simulates the kinematics of the robotic device 100. The actuator model 220 outputs policy actions 208 to a robotic model 212 that simulates the motion of the robotic device 100. The robotic model 212 generates feedback 210 to the low-level control 218.

For example, the feedback 210 may be based on the inertial measurement unit 110, the position encoders in the actuators 114, or both. The feedback 210 may be used to adjust future policy actions 208.

As mentioned, the reference motions 204 transmitted to the comparison model 222 as well as to the policies 202. In the comparison model 222, the policy actions 208 of the robotic device 100 are compared to the reference motions 204 and a reward/penalty 214 is applied. In a particular implementation, the reward/penalty 214 is centered around following artist-directed motions through tracking rewards, while at the same time ensuring that the robotic device 100 is dynamically balanced through survival rewards. The reward/penalty 214 is used to develop training data 206 transmitted back to the policies 202 to improve their function.

In some examples the training 206 is executed with proximal a policy optimization ("PPO") RL algorithm. PPO may improve the stability and efficiency of the training process compared to other techniques for policy 202 learning to make decisions by optimizing a policy 202 directly. PPO addresses challenges in training that may arise from large updates used by older methods which can destabilize the training process. In some embodiments, PPO limits the size of policy 202 updates during training, to help ensure small, incremental changes.

In some embodiments, the control policies 202 may be trained off-line and after such offline training, the control policies 202 can be deployed, e.g., implemented in neural networks, to the onboard controller 102 to control the robotic device's leg 112 and neck 118 motion via a remote-control device 304, such as a joystick, mouse, track pad, handheld computer, or other input mechanism. Control policies 202 for predefined animations (e.g., episodic motion 406) can be triggered via additional controller inputs, e.g., buttons on a remote control 304, such as those similar to a gamepad with an optional display. Control policies 202 receive high-level user input (e.g., for walking) as well as current internal state of the robotic device 100 as input, and output signals for the actuators 114, (e.g., positions, velocities, and/or torques), for the next time tick. In some embodiments, a control policy may be trained using multiple, parallel simulations of the robotic device 100.

In some examples, periodic motion 404 may be interfaced with animation content by extracting kinematic motion references that define the device's time-varying target state,

$$\mathbf{x}_t = (\mathbf{p}_t, \boldsymbol{\theta}_t, \mathbf{v}_t, \boldsymbol{\omega}_t, \mathbf{q}_t, \dot{\mathbf{q}}_t, c_t^L, c_t^R), \tag{Eq.8}$$

where $\mathbf{p}_t$ is the global position of the torso and $\boldsymbol{\theta}_t$ its orientation, represented with a quaternion. $\mathbf{v}_t$ and $\omega_t$ are the torso's linear and angular velocity, and $\mathbf{q}_t$ and $\dot{\mathbf{q}}_t$ the joint positions and velocities. The indicator variables, $c_t^L$ and $c_t^R$, define the contact state of the device's left and right foot.

In some examples, for each motion type, a generator function $f$ maps a path frame, $\mathbf{f}_t$, and an optional phase signal and type-dependent control input to the kinematic target state

$$\begin{aligned} \mathbf{x}_t &= f^{\mathrm{perp}}\big(\mathbf{f}_t, \mathbf{g}_t^{\mathrm{perp}}\big) \\ (\mathbf{x}_t, \dot{\phi}_t) &= f^{\mathrm{peri}}\big(\mathbf{f}_t, \phi_t, \mathbf{g}_t^{\mathrm{peri}}\big) \\ \mathbf{x}_t &= f^{\mathrm{epis}}(\mathbf{f}_t, \phi_t). \end{aligned} \tag{Eq. 9}$$

In some examples, the reference generator for periodic motions additionally outputs the phase rate, $\dot{\phi}_t$, that drives the phase signal. This enables variation of the stepping frequency during walking as a function of the commands. For episodic motions 406, the phase rate is determined by the duration of the motion.

In some examples, the perpetual motion 402 (e.g., standing motion) uses a control input that includes head and torso commands which a relevant control policy may execute within the limits of relevant actuators of the robotic device. The head height and orientation may be commanded relative to a nominal configuration with a height and orientation offset, $\Delta h_t^{\mathrm{head}}$ and $\Delta \boldsymbol{\theta}_t^{\mathrm{head}}$. The torso position and orientation are commanded with a height, $h_t^{\mathrm{torso}}$, and orientation, $\boldsymbol{\theta}_t^{\mathrm{torso}}$, represented with ZYX-Euler angles, in path frame coordinates

$$\mathbf{g}_t^{\mathrm{perp}} = \big(\Delta h_t^{\mathrm{head}}, \Delta \boldsymbol{\theta}_t^{\mathrm{head}}, h_t^{\mathrm{torso}}, \boldsymbol{\theta}_t^{\mathrm{torso}}\big) \tag{Eq. 10}$$

In some examples, for the periodic motion 404 the same head commands may be used as with the episodic motion 406 as well as a 2D velocity vector, $\mathbf{v}_t^{\mathcal{P}}$, and angular rate, $\omega_t^{\mathcal{P}}$, both expressed in path frame coordinates

$$\mathbf{g}_t^{\text{peri}} = \left( \Delta h_t^{\text{head}}, \Delta \boldsymbol{\theta}_t^{\text{head}}, \mathbf{v}_t^{\mathcal{P}}, \omega_t^{\mathcal{P}} \right) \qquad \text{(Eq. 11)}$$

In some examples, for periodic motion the head commands are offset relative to a nominal head motion that the animator specifies as part of the periodic walk cycle. This set of commands puts artists in control of the velocity-dependent lower-body motion while the corresponding references for the neck-head assembly can be adapted to have the robotic device look in a particular direction during locomotion.

In some examples, the path frame plays a role in maintaining consistency during motion transitions. Each artist-designed motion is stored in path coordinates and mapped to world coordinates based on the path frame state according to the generators $f$. During standing, the path frame slowly converges to the center of the two feet. During walking, the next frame is computed by integrating the path velocity commands. For episodic motions, the path frame trajectory relative to the starting location is part of the artistic input. To prevent excessive deviation from the path, $\mathbf{f}_t$ is projected to a maximum distance from the current torso state.

The method 200 is agnostic to the tool or technique that an artist uses to generate kinematic reference motion. To generate perpetual references, inverse dynamics may be used to find a pose that satisfies the commands $\mathbf{g}_t^{\text{perp}}$ and solves for optimal values for the remaining degrees of freedom such that the center of pressure is in the middle of the support polygon. For periodic motion 404, an artist provides reference gaits at several walking speeds. These gait samples are procedurally combined into a new gait based on the commands $\mathbf{g}_t^{\text{peri}}$. A model predictive controller is used to plan the desired center of mass and center of pressure.

In some examples, to prevent the rate at which reference motions can be generated from slowing down training, the reference generators may be densely sampled and implemented as reference look-up during the RL training method 200 as interpolation of these samples.

In some examples, the reward function combines a motion-imitation rewards with additional regularization and survival rewards, e.g.,

$$r_t = r_t^{\text{imitation}} + r_t^{\text{regularization}} + r_t^{\text{survival}} \qquad \text{(Eq. 12)}$$

The imitation reward $r_t^{\text{imitation}}$ may be computed directly by comparing the simulated to the target pose of the device. The policy 202 receives additional rewards if the foot contact states match the reference states. To mitigate vibrations and unnecessary actions, regularization rewards may be applied that penalize joint torques and promote action smoothness. A survival reward provides a simple objective that motivates the device to keep balance and prevents it from seeking early termination of the episode at the beginning of training. Early termination may be applied when either head or torso are in contact with the ground or if a self-collision between the head and torso is detected. A detailed description of the weighted reward terms is provided in Table 1, where a hat (^) indicates target state quantities from the reference pose $\mathbf{x}_t$. The current time index $t$ may be omitted but spatial indices are included, where appropriate.

Table 1. Weighted Reward Terms

| Name | Reward Term | Weight |
|---|---|---|
| *Imitation* | | |
| Torso position xy | $\exp(-200.0 \cdot \| \mathbf{p}_{x,y} - \hat{\mathbf{p}}_{x,y} \|^2)$ | 1.0 |
| Torso orientation | $\exp(-20.0 \cdot \| \theta \boxminus \hat{\theta} \|^2)$ | 1.0 |
| Linear velocity xy | $\exp(-8.0 \cdot \| \mathbf{v}_{x,y} - \hat{\mathbf{v}}_{x,y} \|^2)$ | 1.0 |
| Linear velocity z | $\exp(-8.0 \cdot (v_z - \hat{v}_z)^2)$ | 1.0 |
| Angular velocity xy | $\exp(-2.0 \cdot \| \omega_{x,y} - \hat{\omega}_{x,y} \|^2)$ | 0.5 |
| Angular velocity z | $\exp(-2.0 \cdot (\omega_z - \hat{\omega}_z)^2)$ | 0.5 |
| Leg joint positions | $-\| \mathbf{q}_l - \hat{\mathbf{q}}_l \|^2$ | 15.0 |
| Neck joint positions | $-\| \mathbf{q}_n - \hat{\mathbf{q}}_n \|^2$ | 100.0 |
| Leg joint velocities | $-\| \dot{\mathbf{q}}_l - \hat{\dot{\mathbf{q}}}_l \|^2$ | $1.0 \cdot 10^{-3}$ |
| Neck joint velocities | $-\| \dot{\mathbf{q}}_n - \hat{\dot{\mathbf{q}}}_n \|^2$ | 1.0 |

(continued)

| Name | Reward Term | Weight |
|---|---|---|
| Contact | $$\sum_{i\in\{L,R\}} \mathbb{1}[c_i == \hat{c}_i]$$ | |
| *Regularization* | | |
| Joint torques | $-\lVert \tau \rVert^2$ | $1.0 \cdot 10^{-3}$ |
| Joint accelerations | $-\lVert \ddot{\mathbf{q}} \rVert^2$ | $2.5 \cdot 10^{-6}$ |
| Leg action rate | $-\lVert a_l - a_{t-1,l} \rVert^2$ | 1.5 |
| Neck action rate | $-\lVert a_n - a_{t-1,n} \rVert^2$ | 5.0 |
| Leg action acc. | $-\lVert a_l - 2a_{t-1,l} + a_{t-2,l} \rVert^2$ | 0.45 |
| Neck action acc. | $-\lVert a_n - 2a_{t-1,n} + a_{t-2,n} \rVert^2$ | 5.0 |
| Survival | 1.0 | 20.0 |

In some examples, policy actions 208, $\mathbf{a}_t$, are joint position setpoints for proportional-derivative (PD) controllers. In addition to an optional motion-specific phase and control command, policies 202 receive a state

$$\mathbf{s}_t = \left(\mathbf{p}_t^{\mathcal{P}}, \boldsymbol{\theta}_t^{\mathcal{P}}, \mathbf{v}_t^{\mathcal{T}}, \boldsymbol{\omega}_t^{\mathcal{T}}, \mathbf{q}_t, \dot{\mathbf{q}}_t, \mathbf{a}_{t-1}, \mathbf{a}_{t-2}\right) \qquad \text{(Eq. 13)}$$

as input. To make the state and policy invariant to the robotic device's global location, the torso's horizontal (xy-plane) position, $\mathbf{p}_t^{\mathcal{P}}$, and orientation, $\boldsymbol{\theta}_t^{\mathcal{P}}$, may be represented in path frame coordinates, and the torso's linear and angular velocities, $\mathbf{v}_t^{\mathcal{T}}$ and $\boldsymbol{\omega}_t^{\mathcal{T}}$, in body coordinates. The joint positions, joint velocities, and the actions may be appended at the previous two time-steps.

FIG. 3 shows an example method 300 of operating a robotic device 100 with the trained policies 202. Although the example method 300 depicts a particular sequence of operations, the sequence may be altered without departing from the scope of the present disclosure. For example, some of the operations depicted may be performed in parallel or in a different sequence that does not materially affect the function of the method 300. In other examples, different components of an example device or system that implements the method 300 may perform functions at substantially the same time or in a specific sequence.

After offline training, the parameters of the policy 202 may be fixed and deployed onto the onboard controller 102 of the robotic device 100. Instead of interacting with a simulator, the policy 202 interfaces with a real robotic device 100, as opposed to the robotic simulation, and an onboard state estimation 314 that provides the state of the robotic device 100 based on inertial measurement unit 110 and actuator 114 measurements (e.g., encoder values).

The runtime system enables an operator to puppeteer or otherwise provide animation controls to the robotic device 100 using a remote-control interface of the remote control 304. In some embodiments, the remote control 304 includes various controls with which a user can interact to produce a user input 310. For example, the remote control 304 may include one or more of: analog "thumbsticks" e.g., provided for directional navigation of the head or body of the robotic device 100, action buttons positioned for easy access (e.g., adjacent to the thumbsticks), a directional pad or "d-pad" that enables precise control of the robotic device 100, and/or for navigating menus (e.g., in examples where the remote control 304 includes an optional display), a trackpad or touch screen which may offer mouse-like precision for user inputs 310, triggers/bumpers, typically adapted to be operated by index or middle fingers, e.g., on a shoulder of the remote control 304, a gyroscopic sensor or IMU adapted to capture motion of the remote control 304 and translate that motion into a user input 310, and/or a grip button, e.g., positioned on the rear of the remote control 304 and allowing for more input options without needing to move fingers away from other controls.

The animation engine 308 maps the associated puppeteering commands (including policy switching, triggered animation events, and joystick input) to policy actions 208, show functions 126 signals, and/or audio signals.

The robotic device 100 can be remotely operated via the controller with an integrated gaming controller, with a standalone remote control 304, or alternatively with a PC and a separate gaming controller. The remote control 304 may have user inputs, e.g., one or more joysticks for commanding continuous inputs, as well as buttons which are mapped to control various robotic device 100 functions or trigger motions or other events. Preferably, the remote control 304 communicates with the robotic device 100 over a wireless connection such as a Wi-Fi, Radio, Bluetooth, or other suitable wireless connection. The communication between the remote control 304 and the robotic device 100 may be direct, or via an appropriate network such as a local area network (LAN), a wide area network (WAN), and/or other networks. Commands may be streamed over a custom radio connection e.g., a long range ("LoRa"). LoRa technology is suitable for long-range, low-power communication between devices. LoRa technology typically operates in the sub-gigahertz radio frequency bands, such as 868 MHz in Europe and 915 MHz in North America.

The method 300 may begin when a user generates one or more user inputs 310 e.g., via a remote control 304. The user inputs 310 may be received by an animation engine 308. The animation engine 308 may compare the user input 310 to an animation database 302 including animations on which the policy 202 was trained. If an animation is found in the animation database 302, control commands may be issued by the animation engine 308 to the policy 202. Additionally, user inputs 310 may be mixed with animation content by the animation engine 308 before the inputs are passed to the policy 202 executed by the controller 102.

Any of the policies 202 disclosed may enable automated motion retargeting of an animation input, which avoids collisions in the output, such as if a commanded animation is not found in the animation database 302 or would exceed the physical limits of the robotic device 100.

The policy 202 uses the control commands to activate the appropriate policy 202 (e.g., a policy for perpetual motion, periodic motion, or episodic motion). The policies 202 output instructions to a low-level control 218 (e.g., an actuator 114 control) that then operates a given actuator 114.

In some examples, the policy 202 outputs policy actions 208 at one speed (e.g., 50 Hz) and the low-level control 218 operates at another, higher speed (e.g., 600 Hz). To bridge this gap, a first-order-hold may be performed on the policy actions 208, e.g., a linear interpolation of the previous and current policy actions 208, followed by a low-pass filter with a cut-off frequency e.g., 37.5 Hz. The low-level control 218 may also implement path frame dynamics and phase signal propagation described herein. These low-level control 218 aspects may be identically implemented in the RL and runtime environments.

The animation engine 308 also coordinates live animation content 312 (such as the show functions 126 or other animation based on a user input 310 such as a live puppeteer command) with animation content retrieved from the animation database 302. Show functions 126, such as lights and sounds, and also small functions such as the antenna 104, may be included in the robotic device's performance and may be prescribed as part of the artistic input. However, the show functions 126 may be configured to not change the robotic device's balance or overall body motion so they can be commanded directly to the robotic device 100 (e.g., external to the RL policy 202). Example show function parameters are shown in Table 2.

Table 2. Example Show Function Parameters

| Function Parameters | Dimensionality | Units |
|---|---|---|
| Antenna positions | 2 x 1 | [ rad] |
| Eye colors | 2 x 3 | [RGB] |
| Eye radii | 2 x 1 | [ %] |
| Head lamp brightness | 1 | [ %] |

In addition, user inputs 310 may be transmitted to the audio engine 306 to cause the robotic device 100 to play sounds, speak, or the like. As with the show functions 126, the audio engine 306 may be commanded directly to the robotic device 100, bypassing the policy 202.

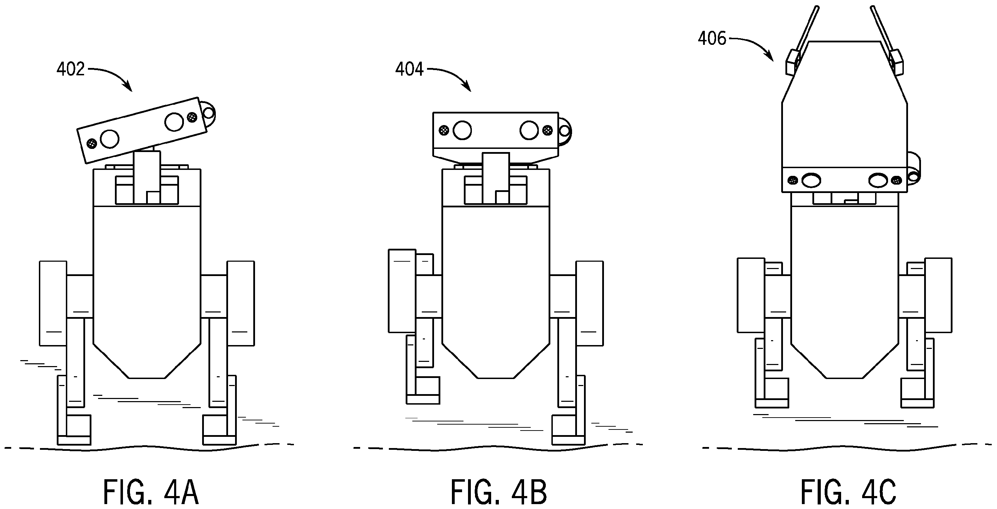

As shown for example in FIG. 4A - FIG. 4C, the policy 202 and/or robotic device 100 may exhibit specific types of motion and have associated policies (e.g., perpetual motion 402, periodic motion 404, or episodic motion 406). To enable a broad and varied gamut of performances, multiple and different approaches for controlling the robotic device's walking and show functions may be used. The system can switch between different RL control policies 202 on the fly (e.g., dynamically) to create a seamless show. In a particular example, the approaches and policies include, but are not limited to:

Perpetual motions 402 (e.g., expressive idle) which do not have a clear start and end. The robotic device 100 maintains balance and responds to the measured state and a continuous stream of user inputs 310. For example, a perpetual motion 402 can be an expressive idle RL control policy 202 for a standing robotic device 100 that maintains balance and is robust to disturbances. As inputs to the idle policy 202, a head pose and desired body pose can be provided. This allows, during execution, the robotic device 100 head and body 124 to be animated by altering the commanded pose. In yet another example, idle policies 202 may allow for the posture of the robotic device (head and body) to be commanded at will. Such policies 202 maintain robustness to disturbances, robustness to model errors, and respect the limits of the robotic device 100 hardware.

Periodic motions 404 (e.g., expressive walking) are characterized by a periodic phase signal which is passed to the policy. In this mode, the phase signal cycles, perhaps indefinitely. For example, a periodic motion 404 can be an expressive walk RL control policy 202 for robotic device walking that matches a desired walking direction, gait, and/or velocity, while balancing and being robust to disturbances. During training, (e.g., in the method 200) artist-authored procedural gaits are provided as a style reference. As additional inputs to the walking policy 202, desired head pose can be provided that enables the robotic device to walk stably while moving its head and the body motion is automatically adapted to account for head dynamics.

Episodic Motions (e.g., hero motions) have a predefined duration. Episodic policies 202 receive a monotonically increasing phase signal. Once the motion ends, a transition to a new motion is forced. For example, an episodic motion RL control policy 202 may be specifically configured to execute an artist-specified input animation, while balancing and maintaining robustness to disturbances. The policy 202 may not include additional inputs, i.e., it generates a controller for a full body 124 motion that may not be adapted through additional user inputs 310. Such episodic motion 406 policies 202 may include transferring artist-created animations onto a robotic device 100 by training specific RL policies 202 (e.g., character specific animations, such as hero animations), to increase system performance. The actual motion performed by the robotic device 100 can be adapted as needed in order to recover from any disturbances, maintain robustness to model errors, and respect the limits of the robotic device 100 hardware.

These different approaches trade off adaptability against expressivity. For highly dynamic full-body motions, hero animations, may be used that perform an artist specified motion sequence. These motions may not be altered on-the-fly (e.g., while operating the robotic device 100), but are able to reach the limits of the hardware. For less extreme motions, and for motions while walking, the perpetual motion 402 and periodic motion 404 policies 202 allow for the motions to be adapted on-the-fly, e.g., so the robotic device 100 can look at an object or person in the scene while walking.

In another example, a method for creating robust walking policies which allow for the posture of the robotic device (e.g., head) to be commanded at will is disclosed. The method moreover takes as input a prescribed walking style, to be followed as closely as possible. The method maintains robustness to disturbances, robustness to model errors, and respects the limits of the robotic device hardware.

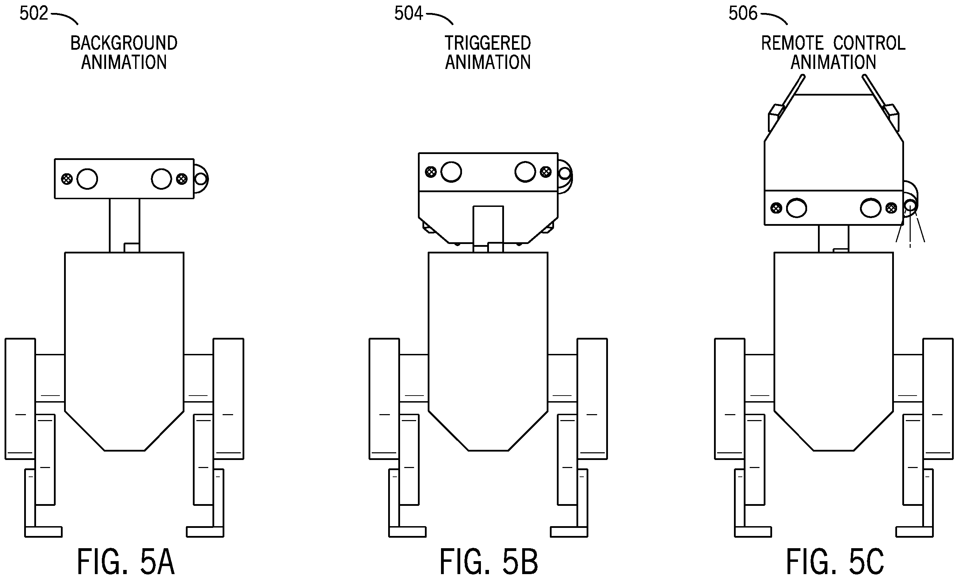

As shown for example in FIG. 5A - FIG. 5C, the command inputs for expressive walking and expressive idle policies can be generated through the playback of pre-authored artist content (e.g., perpetual motion 402, periodic motion 404, or episodic motion 406) or through direct animation by the animator. Moreover, the command inputs can be layered to provide additional expressivity (e.g., commanding the head to look up and then executing a head-shaking animation). As shown for example in FIG. 5A, a background animation 502 (e.g., standing) may be commanded by a user input 310 or as a default of a policy 202. A user may layer one or more additional animations on the background animation 502. For example, a triggered animation 504 (e.g., retracting the neck 118 and looking up) may be layered with the background animation 502. Additionally or alternately, a remote control animation 506 may be layered with either the background animation 502 or the triggered animation 504 (e.g., the robotic device 100 may look down, turn on its head lamp 106 and appear to shake its head).

In some embodiments, the animation engine 308 procedurally generates the animation command, $\mathbf{y}_t$, based on three layers: background animation (as shown for example in FIG. 5A), triggered animations (as shown for example in FIG. 5B), and animations derived from joystick inputs (as shown for example in FIG. 5C).

During standing and walking, show functions 126 and policy actions 208 are computed by combining event-driven animation playback with live puppeteering. To procedurally generate animation states, the robotic device configuration may be defined as, $\mathbf{c}_t = \left( \mathbf{p}_t^{\mathcal{P}}, \boldsymbol{\theta}_t^{\mathcal{P}}, \mathbf{q}_t \right)$, from which control inputs are extracted. An extended animation command may be defined, $\mathbf{y}_t = (\mathbf{v}_t, \mathbf{c}_t)$, where $\mathbf{v}_t$ represents show function commands as summarized in Table 3.

Background animation 502: This layer relies on looped playback of a periodic background animation, $\mathbf{y}_t^{\text{bg}}$, that may be visible in the absence of additional input. The background animation 502 conveys a basic level of activity that includes intermittent eye-blinking and antenna 104 motion.

Triggered Animations 504: This layer blends operator-triggered animation clips on top of the background animation 502. The triggered animations 504 may be selected from a library of artist-specified clips and mapped to buttons on the remote control 304. The triggered animations 504 range from simple "yes-no" animations to complex "scan" clips. Representing the current state of a triggered animation with $\mathbf{y}_t^{\text{trig}}$, the background and triggered targets may be blended as:

$$\begin{aligned} \mathbf{v}_t^{\text{bld}} &= (1 - \beta)\mathbf{v}_t^{\text{bg}} + \beta\mathbf{v}_t^{\text{trig}} \\ \mathbf{c}_t^{\text{bld}} &= \text{interp}\left( \mathbf{c}_t^{\text{bg}}, \mathbf{c}_t^{\text{trig}}, \alpha \right), \end{aligned} \qquad \text{(Eq. 14)}$$

where the configuration interpolation is linear for position and joint angles and may use spherical linear interpolation ("SLERP") for body orientation. $\beta$ and $\alpha$ are blend ratios that vary as a function of playback time. Both ratios ramp linearly from 0 to 1 for a given duration at the beginning of an animation and back to 0 over the same duration prior to the end of the animation. The durations may be such that $T_\beta = 0.1$ s and $T_\alpha = 0.35$ s, such that the facial expressions associated with the show functions 126 naturally blend faster than the body animation.

Remote control animation 506: The final layer transforms the blended animation state, $\mathbf{y}_t^{\text{bld}}$, based on user input 310 from the puppeteer (e.g., from the remote control 304). Let $\mathbf{u}$ represent the joystick axes, triggers, and button modifiers streamed from the controller. While standing, the target robotic device configuration is computed as:

$$\mathbf{y}_t = \mathcal{J}^{\text{perp}}\big(\mathbf{y}_t^{\text{bld}}, \mathbf{u}_t\big), \qquad\qquad\qquad \text{(Eq. 15)}$$

where $\mathcal{J}^{\text{perp}}$ is a non-linear mapping that modifies the current animation state based on the commanded inputs. The joystick axes are mapped to additive offsets to the animated head and torso pose contained in $\mathbf{c}_t^{\text{bld}}$, modifying the robotic device's gaze and posture while idling or executing a triggered animation. An illustrative example is provided in FIG. 5C.

While walking, the target robotic device 100 configuration is computed using a similar mapping,

$$\big(\mathbf{y}_t, \mathbf{v}_t^{\mathcal{P}}, \omega_t^{\mathcal{P}}\big) = \mathcal{J}^{\text{peri}}\big(\mathbf{y}_t^{\text{bld}}, \mathbf{u}_t\big), \qquad\qquad\qquad \text{(Eq. 16)}$$

that additionally produces path velocity commands for the periodic policy. For ease of use, gaze controls may be similar; however, the joystick axes used for posture control are remapped to forward, lateral, and turning velocity commands during walking. Show functions 126 modulation based on the path velocity. For example, as the robotic device 100 reaches top speed, the antenna 104 may duck back and the eye 122 radii narrow to convey exertion during fast walking.

Once the animation output, $\mathbf{y}_t$, has been computed, the show functions 126 are controlled directly with $\mathbf{v}_t$, while the policy command signals are derived from $\mathbf{c}_t$. For the head, $\mathbf{c}_t$ may be compared to the nominal configuration of the robotic device 100 and extract the relative head commands $\Delta h_t^{\text{head}}$ and $\Delta\boldsymbol{\theta}_t^{\text{head}}$. During standing, the torso height and orientation in $\mathbf{g}_t^{\text{perp}}$ are extracted directly from the target configuration. While walking, the lower body motion is determined by the periodic policy and commanded path velocities. Note that in both cases, the leg joint positions may be ignored, which may not be part of the policy inputs.

The combination of user inputs and live animation content allows for simple, intuitive, and expressive remote operation of the robotic device 100. The remote operator will provide high-level commands (e.g., "walk to center stage", or "take a hero pose") that fit the context of the robotic device's environment and story being told. The overlaid animation content provides the subtle movements and detail to express emotions and make the character appear to come alive. For example, the user can make the robotic device 100 look in the direction of a person and then overlay this with an animated "Yes or No" head motion. The animation engine 308 will coordinate the synchronized control of show functions 126 like antennas, eyes, and audio. Similarly, the coordination of show functions 126 with triggered hero-animations is also done by the animation engine 308.

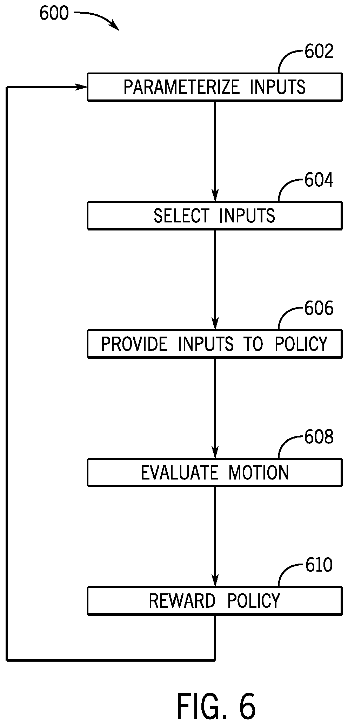

FIG. 6 illustrates an example method 600 for training an RL policy. Although the example method 600 depicts a particular sequence of operations, the sequence may be altered without departing from the scope of the present disclosure. For example, some of the operations depicted may be performed in parallel or in a different sequence that does not materially affect the function of the method 600. In other examples, different components of an example device or system that implements the method 600 may perform functions at substantially the same time or in a specific sequence.

According to some examples, the method 600 includes parameterizing inputs at operation 602. Parameterization typically involves selecting possible values for a characteristic that may be experienced in the real robotic device 100 or its environment. The parameterized inputs may be one or more inputs as discussed with respect to the method 200. As discussed, endpoints or maxima/minima may be selected from possible ranges of inputs. Inputs suitable for parameterization may include any physical aspect of the robotic device 100 or its environment that may affect its motions. For example, actuator 114 characteristics like mass, torque, force, speed, number, type, friction, and/or range of motion may be parameterized. Other parameterizable inputs may include robotic device 100 mass, height, degrees of freedom, number of appendages, etc. Other parameterizable inputs may include imparted perturbance to the robotic device 100 (e.g., an object running into or pushing the robotic device), or environmental characteristics like uneven, slick, or wet ground, the presence of obstacles, etc.

According to some examples, the method 600 includes sampling inputs within the parameterized range at operation 604. In the operation 604, inputs within the ranges defined in the operation 602 are selected or sampled. The inputs may be selected at random (e.g., may be randomized inputs 216 selected in a stochastic or Monte Carlo process) or may be selected systematically according to a scheme (e.g., at regular intervals, etc.) The selected inputs may also be provided to a robotic model 212 for later comparison.

According to some examples, the method 600 includes providing inputs to one or more policies 202 at operation 606. For example, the randomized input 216 selected in the operation 604 may be provided to the policies 202. The policies 202 may convert the inputs into one or more low level control 218 commands suitable to operate an actuator 114 or simulate the operation of an actuator 114. These low-level control 218 commands ultimately result in one or more policy actions 208 that are executed by a model of the robotic device 100 in the robotic model 212.

According to some examples, the method 600 includes evaluating the policy-induced policy actions 208 against reference motions at operation 608. In operation 608, the policy actions 208 generated in operation 606 are compared against reference motions 204 based on the selected inputs provided to the robotic model 212.

According to some examples, the method 600 includes rewarding the policy 202 at operation 610. For example, where the policy actions 208 closely match the reference motions 204, a reward 214 is generated that reinforces portions of the policy responsible for the desired motion. Where the policy actions 208 differ from the reference motions 204, a penalty 214 is generated that de-emphasizes the portions of the policy 202 responsible for the undesired motion.

FIG. 7 illustrates a procedure to generate animation content for each of the operational modes (e.g., perpetual motion 402, periodic motion 404, and the episodic motion 406) of the robotic device 100. In some examples, an embodiment includes a design, build, animation, and control pipeline to quickly build custom, freely walking robotic device devices with integrated show functions is disclosed, whereby the control of the robotic device and the control of the show functions 126 is treated as a combined system. Each mode takes a set of user inputs 310 and animation content (e.g., from an animation database 302) and combines these into kinematic reference motions 204. The reference motions 204 are compared to actuator 114 outputs from the policies 202 (which may be processed by one or more of a low-level control 218, an actuator model 220, and/or a rigid body simulation 226.) Based on the comparison, one or more reward/penalties 214 may be generated, such as a tracking reward (that estimates how well the robotic device 100 tracks the reference motions 204) or a survival reward given to a policy for remaining operational or surviving in an environment for a certain period of time or iteration.

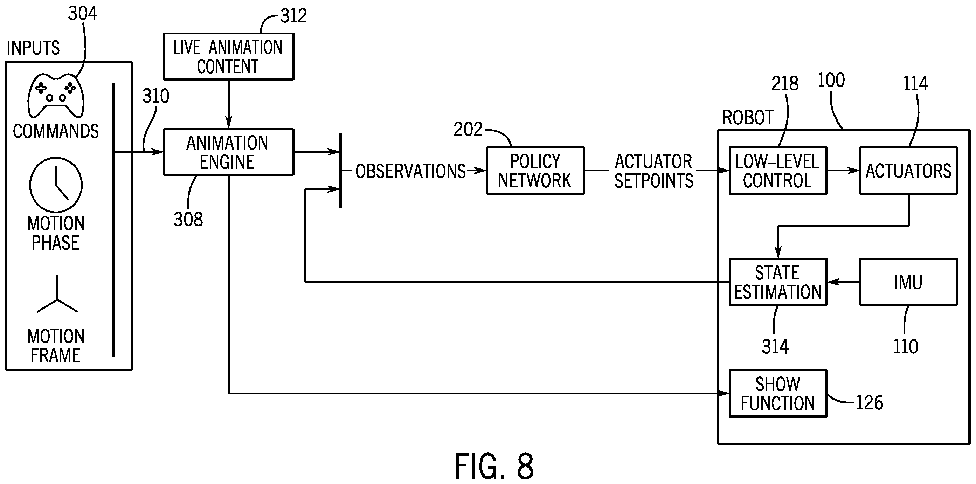

FIG. 8 illustrates an example of operating a robotic device 100 with a trained policy 202. The system includes combining standing controllers (e.g., default policy actions 208) with additional inputs (e.g., user input 310 from a remote control 304) for expressive pose control; walking controllers that follow a prescribed style, with inputs for walking speed and direction as well as for expressive pose control; and pre-trained controllers for full-body hero animations (e.g., episodic motion 406).

User inputs 310 may be generated by a remote control 304 from an operator or animator controlling the robotic device 100. The user inputs 310 may pass to the animation engine 308 that determines the animation type associated with the user input 310. Additionally, a user input 310 may include live animation content 312 such as the operation of one or more of the show functions 126. The user inputs 310 are passed to the policies 202. The policies 202 generate one or more actuator 114 commands that are transmitted to the low-level control 218 (e.g., by the communications interface 116), which in turn operates the actuators 114. The actuators 114 and/or inertial measurement unit 110 may generate state estimation 314 information (e.g., acceleration, speed, position of the robotic device 100 or one or more of its actuators 114). Additionally, as described, the live animation content 312 may be interpreted by the animation engine 308 to activate one or more of the show functions 126.

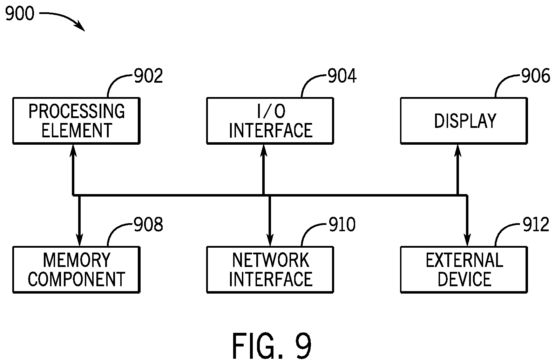

FIG. 9 is a simplified block diagram of components of a computing system 900 of the robotic device 100, such as the controller 102 or the communications interface 116. The computing system 900 may also be used for the remote control 304 and/or for a computer (e.g., a graphical processing unit) used for executing the training method 200 or other method herein. For example, the processing element 902 and the memory component 908 may be located at one or in several computing systems 900. This disclosure contemplates any suitable number of such computing systems 900. For example, the computing system 900 may be a desktop computing system, a mainframe, a blade, a mesh of computing systems 900, a laptop or notebook computing system 900, a tablet computing system 900, an embedded computing system 900, a system-on-chip, a single-board computing system 900, or a combination of two or more of these. Where appropriate, a computing system 900 may include one or more computing systems 900; be unitary or distributed; span multiple locations; span multiple machines; span multiple data centers; or reside in a cloud, which may include one or more cloud components in one or more networks. A computing system 900 may include one or more processing elements 902, an input/output I/O interface 904, one or more external devices 912, one or more memory components 908, and a network interface 910. Each of the various components may be in communication with one another through one or more buses or communication networks, such as wired or wireless networks, e.g., a network. The components in FIG. 9 are exemplary only. In various examples, the computing system 900 may include additional components and/or functionality not shown in FIG. 9.

The processing element 902 may be any type of electronic device capable of processing, receiving, and/or transmitting instructions. For example, the processing element 902 may be a central processing unit, microprocessor, processor, graphics processing unit, or microcontroller. Additionally, it should be noted that some components of the computing system 900 may be controlled by a first processing element 902 and other components may be controlled by a second processing element 902, where the first and second processing elements may or may not be in communication with each other.

The I/O interface 904 allows a user to enter data in to computing system 900, as well as provides an input/output for the computing system 900 to communicate with other devices or services. The I/O interface 904 can include one or more input buttons, touch pads, touch screens, and so on.

The external device 912 are one or more devices that can be used to provide various inputs to the computing systems 900, e.g., mouse, microphone, keyboard, trackpad, sensing element (e.g., a thermistor, humidity sensor, light detector, etc. The external devices 912 may be local or remote and may vary as desired. In some examples, the external devices 912 may also include one or more additional sensors.

The memory components 908 are used by the computing system 900 to store instructions and/or data for the processing element 902 such as the policies 202, the actuator model 220, the robotic model 212, the animation database 302, user preferences, alerts, etc. The memory components 908 may be, for example, magneto-optical storage, read-only memory, random access memory, erasable programmable memory, flash memory, or a combination of one or more types of memory components.

The network interface 910 provides communication to and from the computing system 900 to other devices. The network interface 910 includes one or more communication protocols, such as, but not limited to Wi-Fi, Ethernet, Bluetooth, etc. The network interface 910 may also include one or more hardwired components, such as a Universal Serial Bus (USB) cable, or the like. The configuration of the network interface 910 depends on the types of communication desired and may be modified to communicate via Wi-Fi, Bluetooth, etc. For example, a network interface 910 in the robotic device 100 may communicate with a compatible network interface 910 in the remote control 304.

The display 906 provides a visual output for the computing system 900 and may be varied as needed based on the device. The display 906 may be configured to provide visual feedback to the user and may include a liquid crystal display screen, light emitting diode screen, plasma screen, or the like. In some examples, the display 906 may be configured to act as an input element for the user through touch feedback or the like. The display may be optional, for instance, the robotic device 100 may run with a headless controller 102 with no display.

The description of certain embodiments included herein is merely exemplary in nature and is in no way intended to limit the scope of the disclosure or its applications or uses. In the included detailed description of embodiments of the present systems and methods, reference is made to the accompanying drawings which form a part hereof, and which are shown by way of illustration specific to embodiments in which the described systems and methods may be practiced. These embodiments are described in sufficient detail to enable those skilled in the art to practice presently disclosed systems and methods, and it is to be understood that other embodiments may be utilized, and that structural and logical changes may be made without departing from the spirit and scope of the disclosure. Moreover, for the purpose of clarity, detailed descriptions of certain features will not be discussed when they would be apparent to those with skill in the art so as not to obscure the description of embodiments of the disclosure. The included detailed description is therefore not to be taken in a limiting sense, and the scope of the disclosure is defined only by the appended claims.

From the foregoing it will be appreciated that, although specific embodiments of the invention have been described herein for purposes of illustration, various modifications may be made without deviating from the spirit and scope of the invention.

The particulars shown herein are by way of example and for purposes of illustrative discussion of the preferred embodiments of the present disclosure and are presented in the cause of providing what is believed to be the most useful and readily understood description of the principles and conceptual aspects of various embodiments of the invention. In this regard, no attempt is made to show structural details of the invention in more detail than is necessary for the fundamental understanding of the invention, the description taken with the drawings and/or examples making apparent to those skilled in the art how the several forms of the invention may be embodied in practice.

As used herein and unless otherwise indicated, the terms "a" and "an" are taken to mean "one", "at least one" or "one or more". Unless otherwise required by context, singular terms used herein shall include pluralities and plural terms shall include the singular.

Unless the context clearly requires otherwise, throughout the description and the claims, the words 'comprise', 'comprising', and the like are to be construed in an inclusive sense as opposed to an exclusive or exhaustive sense; that is to say, in the sense of "including, but not limited to". Words using the singular or plural number also include the plural and singular number, respectively. Additionally, the words "herein," "above," and "below" and words of similar import, when used in this application, shall refer to this application as a whole and not to any particular portions of the application.

All relative, directional, and ordinal references (including top, bottom, side, front, rear, first, second, third, and so forth) are given by way of example to aid the reader's understanding of the examples described herein. They should not be read to be requirements or limitations, particularly as to the position, orientation, or use unless specifically set forth in the claims. Connection references (e.g., attached, coupled, connected, joined, and the like) are to be construed broadly and may include intermediate members between a connection of elements and relative movement between elements. As such, connection references do not necessarily infer that two elements are directly connected and in fixed relation to each other, unless specifically set forth in the claims.

Of course, it is to be appreciated that any one of the examples, embodiments or processes described herein may be combined with one or more other examples, embodiments and/or processes or be separated and/or performed amongst separate devices or device portions in accordance with the present systems, devices and methods.

Finally, the above discussion is intended to be merely illustrative of the present system and should not be construed as limiting the appended claims to any particular embodiment or group of embodiments. Thus, while the present system has been described in particular detail with reference to exemplary embodiments, it should also be appreciated that numerous modifications and alternative embodiments may be devised by those having ordinary skill in the art without departing from the broader and intended spirit and scope of the present system as set forth in the claims that follow. Accordingly, the specification and drawings are to be regarded in an illustrative manner and are not intended to limit the scope of the appended claims.

The application further discloses the subject-matter of the following clauses which may form the basis of new claims or combined in any combination with the existing claims by way of amendment and pursued in one or more divisional applications.

Clause 1. A method of training a robotic device comprising:

parameterizing, via a processing element, an input to the robotic device, wherein the parameterizing comprises defining a range of values of the input;

generating, via the processing element, a plurality of samples of the parameterized input from within the range of values;

training a control policy, via the processing element, wherein the training comprises:

providing the plurality of samples to the control policy, wherein the control policy is adapted to operate an actuator of the robotic device, and

generating, via the processing element, a policy action using the control policy;

transmitting the policy action to a robotic model, wherein the robotic model includes a physical model of the robotic device; and

deploying the trained control policy to an on-board controller for the robotic device.

Clause 2. The method of clause 1, wherein the input to the robotic device comprises at least one of:

a mass, torque, force, speed, number, type, or range of motion of a component of the robotic device;

a perturbance imparted to the robotic device;

an operator command; or

an environmental characteristic.

Clause 3. The method of clause 1 or clause 2, wherein the control policy is adapted to cause the robotic device to perform at least one of a perpetual motion, a periodic motion, or an episodic motion.

Clause 4. The method of any of the preceding clauses, wherein the training further comprises:

simulating, via the processing element, a motion of the actuator using the physical model;

comparing, via the processing element, the simulated motion of the actuator to a reference motion of the actuator, wherein the reference motion is based on the plurality of samples; and

rewarding, via the processing element, the control policy based on the comparison.

Clause 5. A method of operating a robotic device comprising:

receiving, at a processing element, a user input, wherein the processing element is in communication with one or more actuators of the robotic device;

comparing, via the processing element, the user input to an animation database;

selecting, via the processing element, an animation from the animation database based on the comparison;

activating, via the processing element, a control policy for the selected animation, wherein the control policy has been trained by a reinforcement learning method;

generating, via the processing element, a low-level control adapted to control a robotic device actuator;

controlling, via the low-level control, the robotic device actuator.

Clause 6. The method of operating the robotic device of clause 5, wherein the user input comprises a command to activate a show function of the robotic device.

Clause 7. The method of operating the robotic device of clause 6, wherein the show function is independent of the robotic device actuator.

Clause 8. The method of operating the robotic device of clause 6 or clause 7, wherein the show function comprises activating at least one of a light, a moveable antenna, an eye, or a sound of the robotic device.

Clause 9. The method of operating the robotic device of any of clauses 5 to 8, wherein the reinforcement learning method comprises:

parameterizing, via a second processing element, an input to the robotic device, wherein the parameterizing comprises defining a range of values of the input;
generating, via the second processing element, a plurality of samples of the parameterized input from within the range of values;
providing, via the second processing element, the plurality of samples to a control policy;
generating, via the second processing element, a policy action using the control policy and transmitting the policy action to a robotic model, wherein the robotic model includes a physical model of the robotic device;
simulating, via the second processing element, a motion of the robotic device actuator using the physical model;
comparing, via the second processing element, the simulated motion of the robotic device actuator to a reference motion of the robotic device actuator, wherein the reference motion is based on the plurality of samples; and
rewarding, via the processing element, the control policy based on the comparison of the simulated motion of the robotic device actuator to the reference motion.

Clause 10. The method of operating the robotic device of clause 9, wherein the input to the robotic device comprises at least one of:

a mass, torque, force, speed, number, type, or range of motion of a component of the robotic device;
a perturbance imparted to the robotic device;
an operator command; or
an environmental characteristic.

Clause 11. The method of operating the robotic device of clause 9 or 10, wherein the control policy is adapted to cause the robotic device to perform at least one of a perpetual motion, a periodic motion, or an episodic motion.

Clause 12. The method of operating the robotic device of any of clauses 5 to 11, wherein the selected animation comprises one or more of a background animation or a triggered animation, and the method of operating the robotic device further comprises layering at least one of the background animation or the triggered animation with a remote control animation.

Clause 13. The method of operating the robotic device of clause 12, wherein the remote control animation is based on the user input received from a remote control.

Clause 14. A robotic device comprising:

a plurality of modular hardware components;
a processing element in communication with the plurality of modular hardware components;
a plurality of control policies trained by a reinforcement learning method to control the plurality of modular hardware components.

Clause 15. The robotic device of clause 14, wherein the user input comprises a command to activate a show function of the robotic device.

Clause 16. The robotic device of clause 15, wherein the show function is independent of the robotic device actuator.

Clause 17. The robotic device of any of clauses 14 to 16, wherein the selected animation comprises one or more of a background animation or a triggered animation, and the robotic device is further operable by layering at least one of the background animation or the triggered animation with a remote control animation.

Clause 18. The robotic device of any of clauses 14 to 17, wherein the reinforcement learning method comprises:

parameterizing, via a second processing element, an input to the robotic device, wherein the parameterizing comprises defining a range of values of the input;
generating, via the second processing element, a plurality of samples of the parameterized input from within the range of values;

providing, via the second processing element, the plurality of samples to a plurality of control policies;

generating, via the second processing element, a policy action using one of the plurality of control policies and transmitting the policy action to a robotic model, wherein the robotic model includes a physical model of the robotic device;

simulating, via the second processing element, a motion of the actuator using the physical model;

comparing, via the second processing element, the simulated motion of the actuator to a reference motion of the actuator, wherein the reference motion is based on the plurality of samples; and

rewarding, via the processing element, the one of the plurality of control policies based on the comparison of the simulated motion of the actuator to the reference motion.

Clause 19. The robotic device of clause 18, wherein the input to the robotic device comprises at least one of:

a mass, torque, force, speed, number, type, or range of motion a component of the robotic device;
a perturbance imparted to the robotic device;
a user input; or
an environmental characteristic.

Clause 20. The robotic device of clause 18 or 19, wherein the plurality of policies are adapted to cause the robotic device to perform at least one of a perpetual motion, a periodic motion, or an episodic motion.

Clause 21. The robotic device of any of clauses 14 to 20, wherein the robotic device is operable by:

receiving, at the processing element, a user input;
comparing, via the processing element, the user input to the animation database;
selecting, via the processing element, an animation from the animation database based on the comparison;
activating, via the processing element, a control policy of the plurality of control policies for the selected animation;
generating, via the processing element, a low level control adapted to control the actuator;
controlling, via the low level control, the plurality of modular hardware components.

Clause 22. A method of controlling a robotic device comprising:

generating, via a first trained control policy executed by a processing element, a first policy action adapted to perform a perpetual motion;

generating, via a second trained control policy executed by the processing element, a second policy action adapted to perform a periodic motion;

generating, via a third trained control policy executed by the processing element, a third policy action adapted to perform an episodic motion; and

deploying, via the processing element, the first, second, and third policy actions to a plurality of actuators of the robotic device, wherein the plurality of actuators are adapted to perform the perpetual motion, the periodic motion, and the episodic motion.

**Claims**

1. A method of training a robotic device comprising:

parameterizing, via a processing element, an input to the robotic device to generate a parameterized input, wherein the parameterizing comprises defining a range of values of the input;
generating, via the processing element, a plurality of samples of the parameterized input from within the range of values;
training a control policy, via the processing element, to generate a trained control policy wherein the training comprises:

providing the plurality of samples to the control policy, wherein the control policy is adapted to operate an actuator of the robotic device, and
generating, via the processing element, a policy action using the control policy; and

transmitting the policy action to a robotic model, wherein the robotic model includes a physical model of the robotic device; and

deploying the trained control policy to an on-board controller for the robotic device.

2. The method of claim 1, wherein the input to the robotic device comprises at least one of:

a mass, torque, force, speed, number, type, or range of motion of a component of the robotic device;
a perturbance imparted to the robotic device;
an operator command; or
an environmental characteristic.

3. The method of claim 2, wherein the perturbance comprises noise.

4. The method of any of claims 1 to 3, wherein the control policy is adapted to cause the robotic device to perform at least one of a perpetual motion, a periodic motion, or an episodic motion.

5. The method of any of claims 1 to 4, further comprising generating, via the processing element, a reference motion of the actuator based on the parameterized input.

6. The method of any of the preceding claims, wherein the training further comprises:

simulating, via the processing element, a motion of the actuator to generate a simulated motion, using the physical model;
comparing, via the processing element, the simulated motion of the actuator to the reference motion to generate a comparison; and
rewarding, via the processing element, the control policy based on the comparison.

7. The method of any of the preceding claims, wherein the range of values is pre-defined, based on a characteristic of the actuator.

8. A method of operating a robotic device trained using the method of any of claims 1 to 7, the method of operating the robotic device comprising:

receiving, at the processing element, a user input;
comparing, via the processing element, the user input to an animation database to generate a second comparison;
selecting, via the processing element, an animation from the animation database based on the second comparison;
activating, via the processing element, the control policy for the selected animation;
generating, via the processing element, a low-level control adapted to control the actuator;
controlling, via the low-level control, the actuator.

9. The method of operating the robotic device of claim 8, wherein the user input comprises a command to activate a show function of the robotic device.

10. The method of operating the robotic device of claim 9, wherein the show function is independent of the actuator.

11. The method of operating the robotic device of claim 9, wherein the show function comprises activating at least one of a light, a moveable antenna, an eye, or a sound of the robotic device.

12. The method of operating the robotic device of any of claims 8-11, wherein the selected animation comprises one or more of a background animation or a triggered animation, and the method of operating the robotic device further comprises layering at least one of the background animation or the triggered animation with a remote control animation.

13. The method of operating the robotic device of claim 12, wherein the remote control animation is based on the user input received from a remote control.

14. A robotic device comprising:

a plurality of modular hardware components;
a processing element in communication with the plurality of modular hardware components; and
a plurality of control policies trained according to any of claims 1 to 7 to control the plurality of modular hardware components; and/or the robotic device is operated according to the method of any of claims 8 to 13.

15. The robotic device of claim 14, wherein the user input comprises a command to activate a show function of the robotic device and optionally, the show function is independent of the actuator.

FIG. 1

FIG. 2

FIG. 3

FIG. 4A

FIG. 4B

FIG. 4C

502

BACKGROUND
ANIMATION

504

TRIGGERED
ANIMATION

506

REMOTE CONTROL
ANIMATION

FIG. 5A

FIG. 5B

FIG. 5C

EP 4 570 452 A2

600

602

PARAMETERIZE INPUTS

604

SELECT INPUTS

606

PROVIDE INPUTS TO POLICY

608

EVALUATE MOTION

610

REWARD POLICY

FIG. 6

FIG. 7

FIG. 8

EP 4 570 452 A2

900

| PROCESSING ELEMENT | | I/O INTERFACE | | DISPLAY |
|---|---|---|---|---|
| 902 | | 904 | | 906 |

| MEMORY COMPONENT | | NETWORK INTERFACE | | EXTERNAL DEVICE |
|---|---|---|---|---|
| 908 | | 910 | | 912 |

## FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63542225 B